**Europäisches Patentamt**

(19) **European Patent Office**

**Office européen des brevets**

(11) Veröffentlichungsnummer: **0 192 126**
**B1**

(12) # EUROPÄISCHE PATENTSCHRIFT

(45) Veröffentlichungstag der Patentschrift:
**27.04.88**

(51) Int. Cl.⁴: **F 16 L 1/02,** E 02 F 3/96

(21) Anmeldenummer: **86101500.6**

(22) Anmeldetag: **05.02.86**

(54) An einen Baggerlöffel o.dgl. anhängbare Vorrichtung zum Handhaben von Rohren o.dgl.

(30) Priorität: **22.02.85 DE 3506211**

(43) Veröffentlichungstag der Anmeldung:
**27.08.86 Patentblatt 86/35**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**EP-A-0 088 057**
**DE-A-3 016 579**
**FR-A-2 228 903**
**US-A-3 834 566**
**US-A-3 874 532**
**US-A-4 462 715**
**US-A-4 495 717**

(73) Patentinhaber: **Grundhöfer, Hermann,**
**Mühlentriesch 33, D-5504 Hentern (DE)**

(72) Erfinder: **Grundhöfer, Hermann, Mühlentriesch 33,**
**D-5504 Hentern (DE)**

(74) Vertreter: **Schönherr, Wolfgang, Patentanwälte**
**Wolfgang Schönherr Dipl.- Ing. Karl- Heinz**
**Serwe Hawstrasse 28, D-5500 Trier (DE)**

EP 0 192 126 B1

## Beschreibung

Die Erfindung betrifft eine an einen Baggerlöffel o. dgl. anhängbare Vorrichtung zum Handhaben von Rohren o. dgl., bestehend aus einem Aufnahmedorn und aus einem quer zum Aufnahmedorn verlaufenden Arm, der mit seinem einen Ende mit dem Aufnahmedorn verbunden ist und der an seinem anderen Ende ein Verbindungsglied zum Verbinden mit dem Baggerlöffel hat.

Bei einer bekannten derartigen Vorrichtung (US-A-3 834 556) wird der Arm des Aufnahmedorns von zwei im Abstand zueinander stehenden Flanschen gebildet, die jeweils eine Durchtrittsöffnung für einen Bolzen zum Verbinden mit dem Baggerlöffel haben. Der Bolzen dient bei dieser bekannten Vorrichtung auch zur Verbindung der Kolbenstange eines Druckzylinders zum Bewegen des Baggerlöffels mit dem Baggerlöffel. Um diesen Bolzen ist der aufnahmedorn mit dem arm schwenkbar angeordnet, wobei ein Anschlag in Form eines weiteren Bolzens am Beggerlöffel die Schwenkbewegung des Armes bzw. des Aufnahmedorns begrenzt.

Nachteilig ist bei dieser bekannten Vorrichtung, daß die Abnahme des Aufnahmedorns vom Baggerlöffel sehr umständlich und zeitaufwendig ist, da dazu der Bolzen gelöst werden muß. Dabei wird zwangsläufig auch die Verbindung der Kolbenstange des Druckzylinders mit dem Baggerlöffel aufgehoben, so daß nach Entfernen des Aufnahmedorns der Bolzen zum Verbinden der Kolbenstange des Druckzylinders wieder eingesetzt werden muß, was sehr zeitaufwendig und mühsam ist.

Da die Erfahrung gezeigt hat, daß bei Baggerarbeiten der unbenutzte Aufnahmedorn, auch in seiner zurückgeklappten Stellung äußerst hinderlich ist, ist das Auf- und Abnehmen des Aufnahmedorns mit erheblichem Zeitverlust verbunden. Dies gilt insb. dann, wenn der Aufnahmedorn eine große Länge aufweist.

Demgegenüber besteht die Aufgabe der Erfindung darin, eine Vorrichtung der eingangs genannten Art derart weiterzubilden, daß diese Vorrichtung vom Raggerführer in einfacher Weise an einen Baggerlöffel an- und abhängbar ist, wobei keine weiteren Verbindungen der Vorrichtung mit dem Baggerlöffel erforderlich sind, so daß auf einfache und kostengünstige Weise Rohre schnell und sicher zu handhaben sind.

Diese Aufgabe wird dadurch gelöst, daß der Arm durch ein Gelenk in einer durch den Aufnahmedorn und den Arm verlaufenden Ebene schwenkbar mit dem Aufnahmedorn verbunden ist, daß der Arm als Verbindungsglied eine Öse, einen Ring o. dgl. zum Einhängen in einen Haken o. dgl. des Baggerlöffels aufweist und daß der Aufnahmedorn an seinem dem Baggerlöffel zugeordneten Ende im Abstand hinter dem Arm eine quer zu seiner Längsrichtung und quer zum Arm verlaufende Anlagefläche zum Anlegen an den Baggerlöffel und eine im Abstand und oberhalb der Anlagefläche etwa parallel zur Anlagefläche verlaufende Stützfläche zum Abstützen am Baggerlöffel hat.

Vorteilhaft sind die Anlagefläche und/oder die Stützfläche derart gewölbt ausgebildet, daß nur ihre überragenden Endabschnitte als Anlage- bzw. Stützpunkte wirken. Auf der Anlagefläche und/oder Stützfläche sind vorzugsweise Gummipuffer o. dgl. angeordnet.

Vorteilhaft sind die Anlagefläche und die Stützfläche durch Streben miteinander verbunden. Die Endabschnitte der Anlagefläche und/oder der Stützfläche sind vorzugsweise durch Querstreben mit dem Aufnahmedorn verbunden.

Vorteilhaft ist der Schwenkwinkel des Armes in einem Bereich von ca. 20° beiderseits der Senkrechten zum Aufnahmedorn begrenzt. Vorzugsweise ist der Arm oder der obere Abschnitt des Armes als Gliederkette ausgebildet.

Bei einer weiteren vorteilhaften Ausführungsform ist auf dem Aufnahmedorn ein den Aufnahmedorn etwa rechtwinklig nach oben überragender Anschlag angeordnet. Vorzugsweise sind auf dem Aufnahmedorn und/oder dem Arm bzw. dem Anschlag Leisten aus Holz, Gummi o. dgl. als Puffer angeordnet.

Mit dem Anschlag ist vorzugsweise ein Haltewinkel zum Arretieren eines auf dem Aufnahmedorn aufgeschobenen Rohres durch Bolzen o.dgl. verbindbar. Vorzugsweise ist der Haltewinkel schwenkbar mit dem freien Ende des Anschlages verbunden und durch eine von Hand lösbare Rastvorrichtung in Arretierstellung gehalten.

Bei einer vorteilhaften Ausführungsform ist der Haltewinkel von einer vorgespannten Feder, Stoßdämpferfeder o. dgl. in Freigabestellung gehalten. Der Haltewinkel weist vorzugsweise einen nach unten zum Aufnahmedorn ragenden Mitnehmer auf.

Die Erfindung ist in den Zeichnungen beispielhaft dargestellt. Es zeigen:

Fig. 1 eine erfindungsgemäße Vorrichtung in perspektivischer Seitenansicht,

Fig. 2 die Vorrichtung in Seitenansicht,

Fig. 3 die Vorrichtung in Vorderansicht,

Fig. 4 eine andere Ausführungsform der Vorrichtung mit Anschlag und Haltewinkel im Ausschnitt,

Fig. 5 die Vorrichtung nach Fig. 4 mit aufgeschobenem Rohr im Ausschnitt,

Fig. 6 eine weitere Ausführungsform der Vorrichtung mit Anschlag, Haltewinkel und Rastvorrichtung in Freigabestellung und

Fig. 7 die Vorrichtung nach Fig. 6 in Arretierstellung

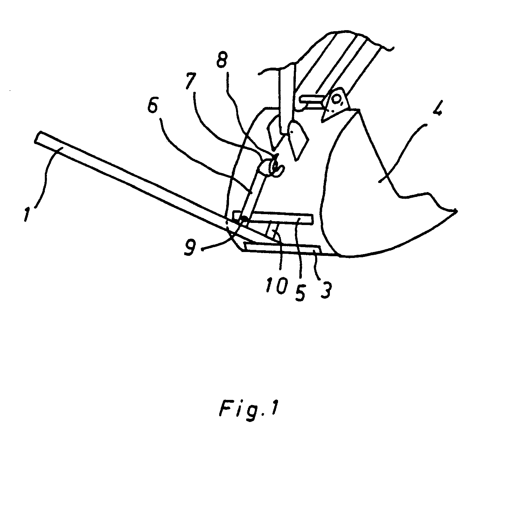

Nach den Fig. 1 bis 3 hat eine erfindungsgemäße Vorrichtung einen Aufnahmedorn 1, der an seinem einen Ende 2 eine im wesentlichen quer zu seiner Längsrichtung verlaufende Anlagefläche 3 zum Anlegen an einen Baggerlöffel 4, eine im Abstand und oberhalb der Anlagefläche 3 etwa parallel zur Anlagefläche verlaufende Stützfläche 5 zum Abstützen am Raggerlöffel 4 und einen etwa quer zur Längsrichtung des Aufnahmedornes 1 und zur Anlage- bzw. Stützfläche verlaufende, vor der Anlage- bzw. Stützfläche mit dem Aufnahmedorn verbundenen Arm 6 aufweist, wobei der Arm an seinem freien Ende eine Öse 7 zum Einhängen in einen Haken 8 des Baggerlöffels 4 hat.

Der Arm 6 ist durch ein Gelenk 9 in einer durch den Aufnahmedorn 1 und den Arm verlaufenden Ebene schwenkbar mit dem Aufnahmedorn verbunden. Der Schwenkwinkel des Armes ist in einem Bereich um die Senkrechte zum Aufnahmedorn 1 begrenzt, so daß der Arm 6 immer etwa rechtwinklig zum Aufnahmedorn steht.

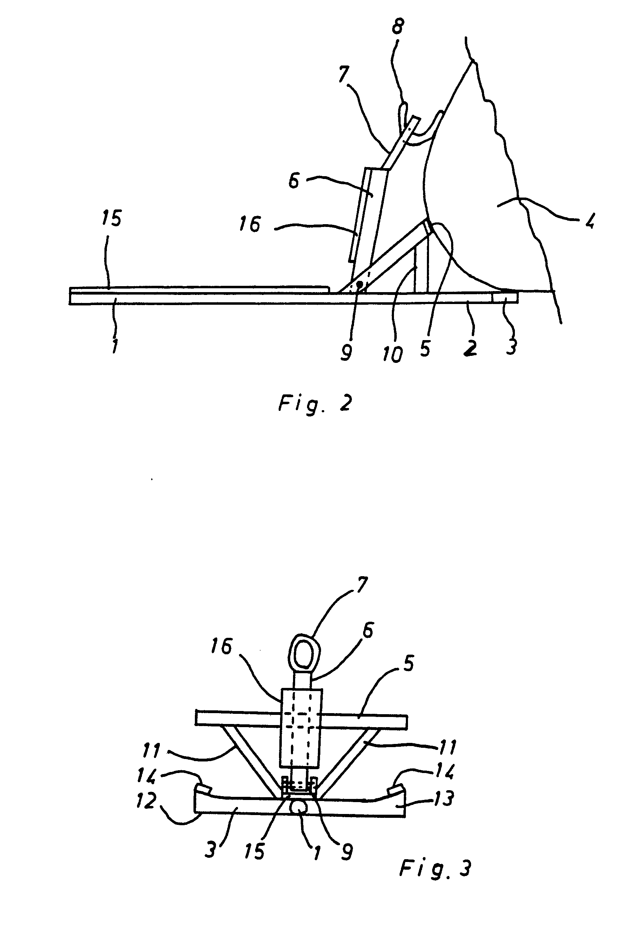

Wie die Fig. 2 zeigt, ist die Stützfläche 5 durch eine Strebe 10 mit den Aufnahmedorn 1 verbunden. Die Strebe 10 kann auch die Stützfläche 5 und die Anlagefläche 3 miteinander verbinden.

Wie die Fig. 3 zeigt, ist die Siützfläche 5 weiterhin durch Querstreben 11 mit dem Aufnahmedorn 1 verbunden. Die Fig. 2 zeigt weiterhin, daß die Anlagefläche 3 derart gewölbt ausgebildet ist, daß ihre Endabschnitte 12 und 13 ihre Mitte überragen. Auf diesen Endabschnitten sind weiterhin Gummipuffer 14 angeordnet.

Wie die Fig. 2 und 3 zeigen, sind auf dem Aufnahmedorn 1 und dem Arm 6 Leisten 15 und 16 aus Holz angeordnet.

Bei Verwendung der erfindungsgemäßen Vorrichtung wird die Vorrichtung an den Baggerlöffel 4 angehängt. Dies kann vom Baggerführer in einfacher Weise durchgeführt werden, in dem er den Haken 8 des Baggerlöffels 4 durch entsprechende Bewegung des Baggerlöffels in die Öse 7 des aufrechtstehenden Armes 6 einhängt.

Wird nun der Baggerlöffel 4 angehoben, so stützt sich die Stützfläche 5 gegen den Baggerlöffel und die Anlagefläche 3 legt sich an den Baggerlöffel an, so daß der Aufnahmedorn 1 die Bewegungen des Baggerlöffels 4 mitvollführt. Die Stützfläche 5 und die Anlagefläche 3 verhindern dabei ein Kippen der Vorrichtung.

Dadurch daß die Anlagefläche 3 und/oder die Stützfläche 5 derart gewölbt ausgebildet sind, daß ihre Endabschnitte 12 und 13 gegenüber ihrer Mitte vorspringen, wirken nur die Endabschnitte als Stützpunkte, so daß die Vorrichtung immer fest am Baggerlöffel anliegt. Die Gummipuffer 14 an Stützfläche und Anlagefläche dämpfen etwa auftretende Stöße.

Zum Handhaben von Rohren wird der Aufnahmedorn 1 durch eine entsprechende Bewegung des Baggerlöffels 4 in das Rohrinnere eines Rohres geschoben, so daß nach Anheben des Baggerlöffels das Rohr auf dem Aufnahmedorn hängt und so transportiert werden kann. Die Leisten 15 und 16 verhindern dabei eine Beschädigung des Rohres.

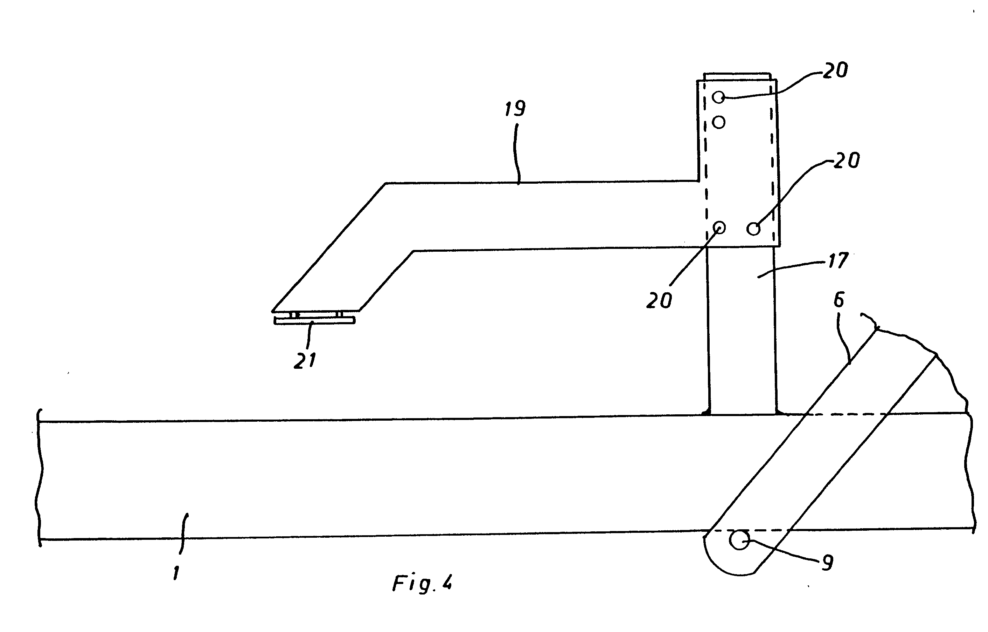

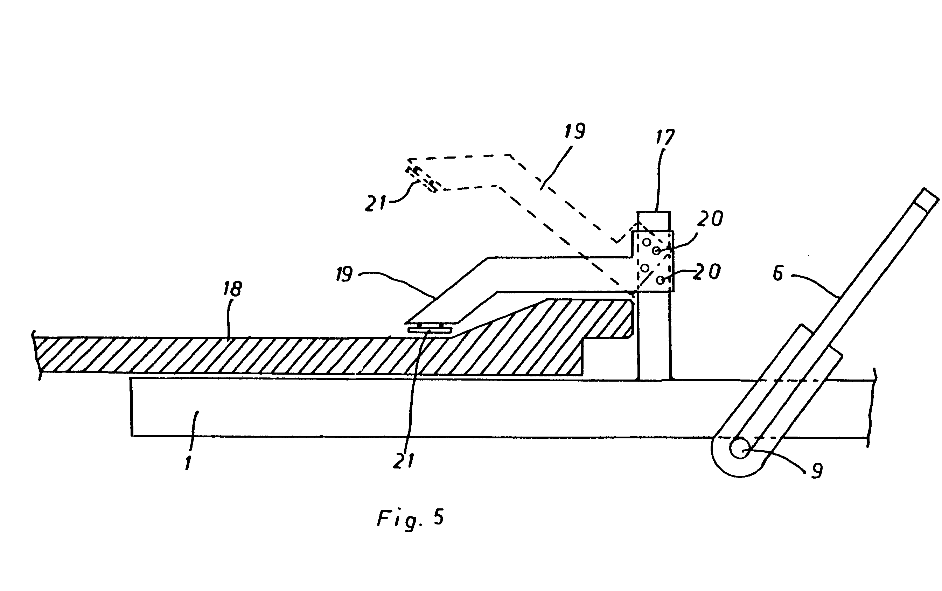

Bei der Ausführungsform der Vorrichtung nach den Fig. 4 und 5 ist auf den Aufnahmedorn 1 vor dem Arm (6) ein etwa rechtwinklig nach oben ragender Anschlag 17 angeordnet, der zur Begrenzung des Aufschiebens eines Rohres 18 auf den Aufnahmedorn dient, wie dies Fig. 5 zeigt.

Wie die Fig. 4 zeigt, ist auf den Anschlag 17 ein Haltewinkel 19 aufschiebbar und durch Steckbolzen 20 fest mit dem Anschlag 17 verbindbar. Nach Fig. 5 ist der Haltewinkel 19 schwenkbar mit dem Anschlag 17 verbunden und durch die Steckbolzen 20 am Anschlag festlegbar.

Der Haltewinkel 17 trägt an seinem freien Ende einen Puffer 21, der in der in Fig. 5 gezeigten ausgezogen dargestellten Arretierstellung auf dem Rohr 18 liegt und so das Rohr gegen Abrutschen vom Aufnahmedorn 1 sichert. Zur Auf- und Abnahme eines Rohres 18 kann der Haltewinkel 19 entweder vom Anschlag 17 abgenommen werden (Fig. 4) oder in die in Fig. 5 gestrichelt gezeichnete Freigabestellung geschwenkt werden.

Zur Anpassung an verschiedene Rohrwandstärken ist der Puffer 21 vorzugsweise einstellbar oder auswechselbar am Haltewinkel 19 angeordnet.

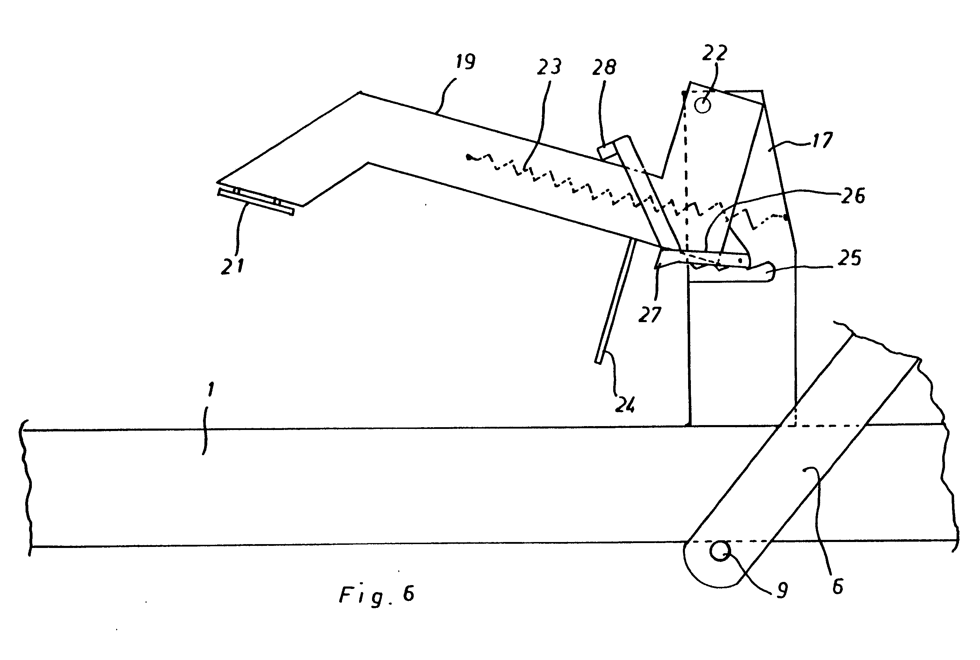

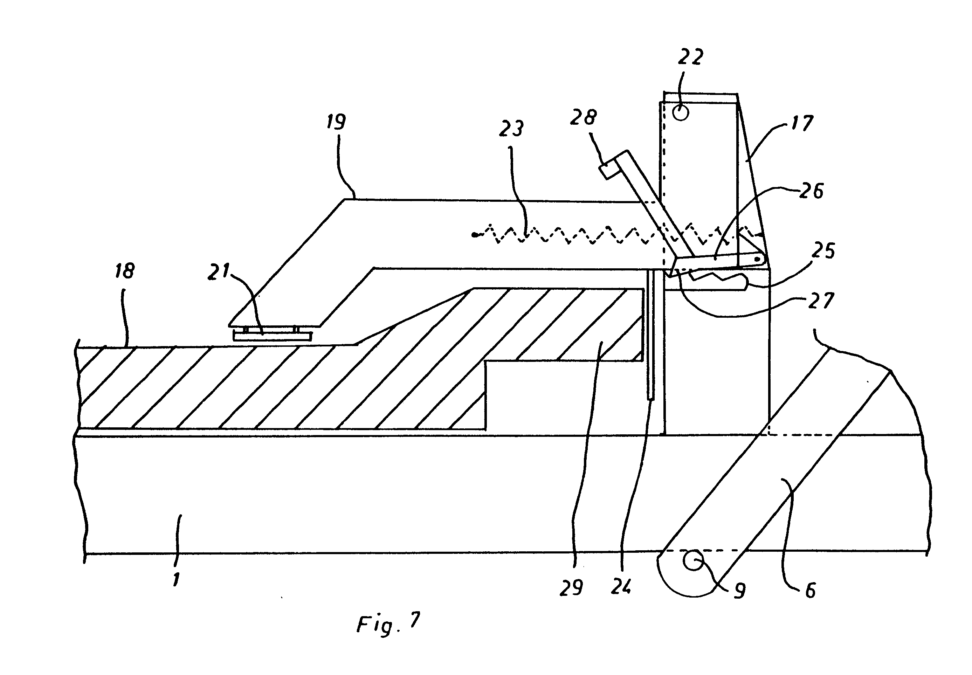

Bei der Ausführungsform der Vorrichtung nach den Fig. 6 und 7 ist der Haliewinkel 19 durch ein Gelenk 22 schwenkbar mit dem Anschlag 17 des Aufnahmedorns 1 verbunden. Zwischen Haltewinkel 19 und Anschlag 17 ist eine vorgespannte Druckfeder 23 angeordnet, die den Haltewinkel 19 in Freigabestellung hält. Anstelle der Druckfeder 23 kann auch ein Stoßdämpfer, eine Stoßdämpferdruckfeder o. dgl. vorgesehen sein.

Am Haltewinkel 19 ist weiterhin ein nach unten zun Aufnahmedorn 1 ragender Mitnehmer 24 angeordnet.

Wie die Fig. 6 und 7 weiter zeigen, sind auf beiden Seiten des Anschlages 17 Rastschienen 25 angeordnet, die mit auf beiden Seiten des Haltewinkels 19 schwenkbar angeordneten Rasthebeln 26 mit Rastnasen 27 zusammenwirken. Die Rasthebel 26 sind durch einen Sted 28 miteinander verbunden.

Wie ferner die Fig. 6 zeigt, ist in Freigabestellung der Haltewinkel 19 von der vorgespannten Druckfeder 23 nach oben geschwenkt gehalten. Die Rastnasen 27 der Rasthebel 26 sind außer Eingriff mit den Rastschienen 25. Der die beiden Rasthebel 26 verbindende Steg 28 liegt dabei wegen seines Gewichtes auf der Oberseite des Haltewinkels 19 auf und begrenzt so die Schwenkbewegung der Rasthebel nach unten.

Wird nun ein Rohr 18 auf den Aufnahmedorn 1 aufgeschoben, so stößt das Muffenende 29 des Rohres 18 während des Aufschiebens zunächst an den Mitnehmer 24 des Haltewinkels 19. Beim weiteren Aufschieben wird der Mitnehmer 24 zum Anschlag 17 hinbewegt, wodurch sich auch der Haltewinkel nach unten bewegt. Dadurch gleiten die Rastnasen 27 über die Rastschienen 25 und arretieren so, sobald das Rohr 18 vollständig aufgeschoben ist, den Haltewinkel 19.

Zur Freigabe des aufgeschobenen Rohres 18 ist es lediglich notwendig, den Steg 28 nach oben zu ziehen, so daß die Rastnasen 27 außer Eingriff mit den Rastschienen 25 kommen. Durch die Anordnung des Haltewinkels 19 ist ein sicherer Halt eines aufgeschobenen Rohres 18 bei allen Bewegungen des Aufnahmedorns 1 gewährleistet.

**Patentansprüche**

1. An einen Baggerlöffel (4) o. dgl. anhängbare Vorrichtung zum Handhaben von Rohren o. dgl., bestehend aus einem Aufnahmedorn (1) und aus einem quer zum Aufnahmedorn verlaufenden Arm (6), der mit seinem einen Ende mit dem Aufnahmedorn verbunden ist und der an seinem anderen Ende ein Verbindungsglied (7) zum Verbinden mit dem Baggerlöffel hat, dadurch gekennzeichnet, daß der Arm (6) durch ein Gelenk (9) in einer durch den Aufnahmedorn (1) und den Arm (6) verlaufenden Ebene schwenkbar mit dem Aufnahmedorn verbunden ist, daß der Arm als Verbindungsglied eine Öse (7), einen Ring o. dgl. zum Einhängen in einen Haken (8) o.dgl. des Baggerlöffels (4) aufweist und daß der Aufnahmedorn an seinem dem Baggerlöffel zugeordneten Ende (2) im Abstand hinter dem Arm eine quer zu seiner Längsrichtung und quer zum Arm verlaufende Anlagefläche (3) zum Anlegen an den Baggerlöffel und eine im Abstand und oberhalb der Anlagefläche etwa parallel zur Anlagefläche verlaufende Stützfläche (5) zum Abstützen am Baggerlöffel hat.

2. Vorrichtung nach Anspruch 1, dadurch gekennzeichnet, daß die Anlagefläche (3) und/oder die Stützfläche (5) derart gewölbt ausgebildet sind, daß nur ihre überragenden Endabschnitte (15, 16) als Anlage- bzw. Stützpunkte wirken.

3. Vorrichtung nach Anspruch 1 oder 2, dadurch gekennzeichnet, daß auf der Anlagefläche (3) und/oder Stützfläche (5) Gummipuffer (14) o.dgl. angeordnet sind.

4. Vorrichtung nach einem der Ansprüche 1 bis 3, dadurch gekennzeichnet, daß die Anlagefläche (3) und die Stützfläche (5) durch Streben (10) miteinander verbunden sind und daß die Endabschnitte (12, 13) der Anlagefläche und/oder der Stützfläche durch Querstreben (11) mit dem Aufnahmedorn (1) verbunden sind.

5. Vorrichtung nach einem der Ansprüche 1 bis 4, dadurch gekennzeichnet, daß der Schwenkwinkel des Armes (6) in einem Bereich von ca. 20° beiderseits der Senkrechten zum Aufnahmedorn (1) begrenzt ist und daß der Arm oder der obere Abschnitt des Armes als Gliederkette ausgebildet ist.

6. Vorrichtung nach einem der Ansprüche 1 bis 5, dadurch gekennzeichnet, daß auf dem Aufnahmedorn (1) ein den Aufnahmedorn etwa rechtwinklig nach oben überragender Anschlad (17) angeordnet ist.

7. Vorrichtung nach einem der Ansprüche 1 bis 6, dadurch gekennzeichnet, daß auf dem Aufnahmedorn (1) und/oder dem Arm (6) bzw. dem Anschlag (17) Leisten (15, 16) aus Holz, Gummi o. dgl. als Puffer angeordnet sind.

8. Vorrichtung nach Anspruch 6 oder 7, dadurch gekennzeichnet, daß mit den Anschlag (17) ein Haltewinkel (19) zun Arretieren eines auf dem Aufnahmedorn (1) aufgeschobenen Rohres (18) durch Bolzen (20) o.dgl. verbindbar ist.

9. Vorrichtung nach einem der Ansprüche 6 bis 8, dadurch gekennzeichnet, daß der Haltewinkel (19) schwenkbar mit dem freien Ende des Anschlages (17) verbunden ist und durch eine von Hand lösbare Rastvorrichtung (25, 26, 27) in Arretierstellung gehalten ist.

10. Vorrichtung nach einem der Ansprüche 6 bis 9, dadurch gekennzeichnet, daß der Haltewinkel (17) von einer vorgespannten Feder (23), Stoßdämpferfeder o. dgl. in Freigabestellung gehalten ist und daß der Haltewinkel einen nach unten zum Aufnahmedorn (1) ragenden Mitnehmer (24) aufweist.

**Claims**

1. Device suspensable from a dipper (4) or the like for handling pipes or the like, consisting of a reception mandrel (1) and of an arm (6) which extends transversely to the reception mandrel and which is connected by its one end to the reception mandrel and which has at its other end a connection member (7) for connection to the dipper, characterised in tht the arm (6) is connected to the reception mandrel by a hinge (9) so as to be swingable in a plane extending through the reception mandrel (1) and the arm, in that the arm has as connection member an eyelet (7), a ring or the like for suspension from a hook (8) or the like of the dipper (4) and in that the reception mandrel has, at its end (2) associated with the dipper, at a spacing behind the arm an abument surface (3), extending transversely to its longitudinal extent and transversely to the arm, for application to the dipper and a support surface (5) extending at a spacing and above the abutment surface approximately parallel to the abutment surface for support against the dipper.

2. Device according to claim 1, characterised in that the abutment surface (3) and/or the supporting surface (5) are arched in design in such a way that only their projecting end portions (15, 16) act as abutment or supporting points respectively.

3. Device according to claim 1 or 2, characterised in that rubber buffers (14) or the like are arranged on the abutment surface (3) and/or supporting surface (5).

4. Device according to one of claims 1 to 3, characterised in that the abutment surface (3) and the supporting surface (5) are connected together by struts (10) and in that the end portions (12, 13) of the abutment surface and/or of the supporting surface are connected to the reception mandrel (1) by cross struts (11).

5. Device according to one of claims 1 to 4, characterised in that the angle of swing of the arm (6) is limited to a region of about 20° on both sides of the perpendicular to the reception mandrel (1) and in that the arm or the upper portion of the arm is designed as a link chain.

6. Device according to one of claims 1 to 5, characterised in that a stop (17) which projects upwardly approximately at right angles above the reception mandrel is arranged on the reception mandrel (1).

7. Device according to one of claims 1 to 6, characterised in that strips (15, 16) of wood, rubber or the like are arranged as buffers on the reception mandrel (1) and/or the arm (6) or the stop (17) respectively.

8. Device according to claim 6 or 7, characterised in that a holding angle (19) for securing a pipe (18) fitted onto the reception mandrel (1) is connectable to the stop (17) by bolts (20) or the like.

9. A device according to one of claims 6 to 8, characterised in that the holding angle (19) is connected swingably to the free end of the stop (17) and is held in the securing position by a manually releasable detent device (25, 26, 27).

10. Device according to one of claims 6 to 9, characterised in that the holding angle (17) is held in the release position by a biassed spring (23), shock-absorbing spring or the like and in that the holding angle has an entrainment means (24) which projects downwardly towards the reception mandrel (1).

## Revendications

1. Dispositif destiné à être suspendu à un godet (4) de pelle mécanique ou engin similaire pour la manipulation de tuyaux ou autres objets, lequel comprend un mandrin de levage (1) et un bras (6) disposé obliquement au-dessus du mandrin sur lequel ce bras s'articule par une extrémité, tandis que l'autre extrémité dudit bras porte un organe d'accouplement (7) pour suspendre le dispositif au godet, caractérisé en ce que le bras (6) est relié par une articulation (9) au mandrin de levage (1) de manière à pouvoir se déplacer angulairement par rapport à ce mandrin dans un plan qui traverse le mandrin (1) et le bras (6), que le bras (6) comporte un oeillet (7), anneau ou similaire pouvant s'engager sur un crochet (8) ou similaire prévu sur le godet (4) de la pelle, et que le mandrin (1) est pourvu, à son extrémité côté godet, à une certaine distance derrière le bras (6), d'une surface de support (3) destinée à porter contre le godet et disposée transversalement par rapport à l'axe longitudinal du mandrin, et d'une surface d'appui (5) disposée à une certaine distance et au-dessus de la surface de support (3), sensiblement parallèle à celle-ci et destinée à supporter le godet (4).

2. Dispositif selon la Revendication 1, caractérisé en ce que la surface de support (3) et/ou la surface d'appui (5) sont incurvées de telle sorte que seules leurs parties extrêmes (15, 16) font saillie et agissent en tant que points de support et d'appui.

3. Dispositif selon l'une ou l'autre des Revendications 1 ou 2, caractérisé en ce qu'il est prévu sur la surface de support (3) et/ou sur la surface d'appui (5) des tampons en caoutchouc (14) ou similaires.

4. Dispositif selon l'une quelconque des Revendications 1 à 3, caractérisé en ce que la surface de support (3) et la surface d'appui (5) sont reliées entre elles par des jambes de force (10) et que les parties extrêmes (12, 13) des surfaces de support ou d'appui sont reliées au mandrin de maintien (1) par des entretoises inclinées et transversales (11).

5. Dispositif selon l'une quelconque des Revendications 1 à 4, caractérisé en ce que l'angle d'oscillation du bras (6) est limité à une amplitude d'environ 20° de part et d'autre de la perpendiculaire au mandrin de levage (1), et que le bras ou sa partie supérieure est réalisé sous forme d'une chaîne à maillons.

6. Dispositif selon l'une quelconque des Revendications 1 à 5, caractérisé en ce qu'il est prévu sur le mandrin de levage (1) une butée (17) constituée par un montant qui fait saillie sensiblement à angle droit vers le haut.

7. Dispositif selon l'une quelconque des Revendications 1 à 6, caractérisé en ce qu'il est prévu sur le mandrin de levage (1) et/ou sur le bras (6) ou encore sur la butée (17) des lattes (15, 16) en bois, caoutchouc, ou matériau similaire, destinées à servir de tampons.

8. Dispositif selon l'une ou l'autre des Revendications 6 ou 7, caractérisé en ce qu'une équerre de maintien (19), destinée à bloquer un tuyau (18) enfilé sur le mandrin de levage (1), peut être rendue solidaire de la butée (17) à l'aide de boulons (20) ou éléments similaires.

9. Dispositif selon l'une quelconque des Revendications 6 à 8, caractérisé en ce que l'équerre de maintien (19) est reliée à l'extrémité libre de la butée (17) de façon à pouvoir pivoter, et maintenue dans une position de blocage à l'aide d'un dispositif à encliquetage (25, 26, 27) déverrouillable manuellement.

10. Dispositif selon l'une quelconque des Revendications 6 à 9, caractérisé en ce que l'équerre de maintien (17) est sollicitée dans sa position de déblocage par un ressort précontraint (23), un amortisseur à ressort ou dispositif similaire, et que l'équerre de maintien comprend un organe d'entraînement (24) qui fait saillie vers le bas en direction du mandrin de levage (1).

Fig.1

Fig. 2

Fig. 3

Fig.4

20

19

20

17

20

21

6

1

9

0 192 126

Fig. 5

0 192 126

Fig. 6

Fig. 7